# EUROPÄISCHE PATENTSCHRIFT

(11) **EP 0 802 693 B1**
(45) Veröffentlichungstag und Bekanntmachung des Hinweises auf die Patenterteilung: **18.04.2007**
(21) Anmeldenummer: 97250068.0
(22) Anmeldetag: 12.03.1997
(51) Int. Cl.: H04Q 7/26, H04Q 7/30

(54) **Verfahren zum Anschluss funkbetriebener Mobilteile nach dem DECT-Standard an ISDN-Nebenstellenanlagen .**
Method for connecting DECT mobile terminals to an ISDN PBX .
Procédé de connexion des mobiles DECT à un autocommutateur privé RNIS .

(30) Priorität: 15.04.1996 DE 19616239
(43) Veröffentlichungstag der Anmeldung: 22.10.1997
(73) Patentinhaber: Aastra DeTeWe GmbH, 10997 Berlin (DE)
(72) Erfinder: Becker, Thomas, 13465 Berlin (DE); Dummann, Uwe, 13409 Berlin (DE); Larsen, Ole Krog, 9490 Pandrup (DK); Volker, Jan Maas, 9220 Aalborg Ost (DK)
(74) Vertreter: Fischer, Uwe

(56) Entgegenhaltungen:
- EP-A- 0 529 359
- WO-A-94/19913
- WO-A-96/38990

## Beschreibung

Die Erfindung betrifft ein Verfahren zum Anschluß von Basisstationen funkbetriebener Mobilteile nach dem DECT-Standard an ISDN-Nebenstellenanlagen, wobei den Mobilteilen sämtliche Leistungsmerkmale der Nebenstellenanlage uneingeschränkt zur Verfügung stehen.

Für schnurlose Telekommunikationsanlagen ist ein europäischen Standard festgelegt, der die Übertragungsverfahren und die Frequenzbänder zur schnurlosen Kommunikation in analogen und digitalen Telefonnetzen umfaßt. Dieser DECT-Standard (Digital European Cordless Telecommunication) bezieht sich auf die Funkschnittstelle zwischen mobilen drahtlosen Endgeräten und einer an ein Telekommunikationssystem fest angeschlossenen Basisstation. Lösungen für das Anbinden von DECT-Anlagen an vorhandene Telekommunikations-Systeme, z.B. ISDN-Anlagen, sind bekannt. Hierzu werden allgemein eine sogenannte DECT-Controller-Einheit zwischen die Basisstation der DECT-Anlage und das Telekommunikations-System geschaltet. Diese Lösungen haben jedoch den Nachteil, daß die DECT-Endgeräte nicht alle üblichen Leistungsmerkmale der Nebenstellenanlagen unterstützen können und somit nicht den gleichen Komfort bieten, wie z.B. direkt angeschlossene System-Endgeräte. Außerdem sind die DECT-Controller-Einheiten bei einem Einsatz an kleinen Nebenstellenanlagen unwirtschaftlich, wenn nur wenige Basisstationen benötigt werden. Hierzu sind Lösungen bekannt, bei denen die DECT-Controller-Einheit mechanisch in das Gehäuse der Nebenstellenanlage integriert wird. Auch diese Lösung weist prinzipiell die gleichen Nachteile auf, wie zuvor angegeben. Weiterhin gibt es Lösungen bei denen die DECT-Funktionalität zwar in die vorhandene Nebenstellenanlage integriert ist, jedoch mit speziellen Schnittstellenkarten, die sonst nicht in der Nebenstellenanlage verfügbar sind und die einen Teil der DECT-Funktionen übernehmen müssen, z.B. Echo-Kompensation und ADPCM-Sprachcodierung (Adaptive Differential Puls Code Modulation), einer Sprachcodierung von 32 kbit/s, die eine gleichzeitige Übertragung von zwölf Gesprächen im gleichen Frequenzkanal gestattet. Die Nebenstellenanlage muß dafür erheblich in ihrer Hardware und Software verändert werden.

Aus der EP 0 529 359 A2 ist eine Nebenstellenanlage mit einem integrierten Mobilteil für die Steuerung von über Basisstationen bedienbaren, schnurlosen Endgeräten bekannt. Gemäß der EP 0 529 359 A2 werden bei der Nebenstellenanlage frei konfigurierbare Schnittstellenmodule für drahtgebundene wie drahtlose Endgeräte verwendet, wobei die Vermittlungs- und Leistungsmerkmalssteuerungsaufgaben durch eine Zentralsteuereinheit und die Verbindungsaufbau- und - abbausteuerungen für die schnurlosen Endgeräte durch eine untergeordnete Steuereinheit erledigt werden. Hieraus ergibt sich eine integrierte Lösung für die Nebenstellenanlage, die sowohl drahtgebundene als auch schnurlose Endgeräte der Nebenstellenanlage steuern kann.

Gemäß der EP 0 529 359 A2 sind die Schnittstellenmodule zum Anschluss von drahtgebundenen Endgeräten oder Basisstationen zur Verbindung mit drahtlosen Endgeräten als ISDN-S0-Schnittstellen ausgebildet, wobei eine Protokollumsetzung von ISDN zu DECT für die schnurlosen Endgeräte erst in der zugeordneten Basisstation erfolgt.

Der Erfindung lag die Aufgabe zugrunde, eine Lösung aufzuzeigen, eine DECT-Anschlußmöglichkeit wirtschaftlich an eine ISDN-Nebenstellenanlage zu realisieren bei gleichzeitiger Bereitstellung aller Leistungsmerkmale der Nebenstellenanlage an den schnurlosen DECT-Endgeräten und außerdem die Mobilität jedes schnurlosen Endgerätes im gesamten Funknetz der DECT-Anlage,z.B. während eines Verbindungsaufbaus oder während des Gespräches stets zu gewährleisten.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Die Erfindung besteht aus speziellen DECT-Basisstationen, die über digitale Schnittstellen an eine ISDN-Nebenstellenanlage angeschlossen werden, um ein DECT-Funknetz zu realisieren. Das DECT-Mobility-Management wird über eine Software-Applikation in der Nebenstelle dargestellt. Mit dem DECT-Endgerät sind damit alle Leistungsmerkmale der Nebenstellenanlage wie an einem drahtgebundenen Systemtelefon darstellbar und zusätzlich wird die Mobilität des Teilnehmers erreicht. Die vorgestellte Lösung, die DECT-spezifischen Anteile in den Basisstationen zu implementieren und an Standard-Schnittstellenkarten anzuschließen, erlaubt eine kostengünstige Integration des DECT-Standards in bestehende ISDN-Nebenstellenanlagen, da sich der Aufwand der Nebenstellenanlage auf eine Software-Anpassung für die DECT-Network-Management-Software beschränkt. Die Lösung bietet dabei höchstmöglichen Komfort am DECT-Mobilteil und erlaubt eine Weiterentwicklung der Nebenstellenleistungsmerkmale ohne die DECT-Infrastruktur zu ändern.

Anhand einer aus zwei Figuren bestehenden Zeichnung wird die Erfindung näher dargestellt. In der Zeichnung zeigen die
- Fig. 1: das Blockschaltbild einer integrierten DECT-Nebenstellenanlage und die
- Fig. 2: das Blockschaltbild einer Nebenstellenanlage als Server an Telekommunikations-Systeme.

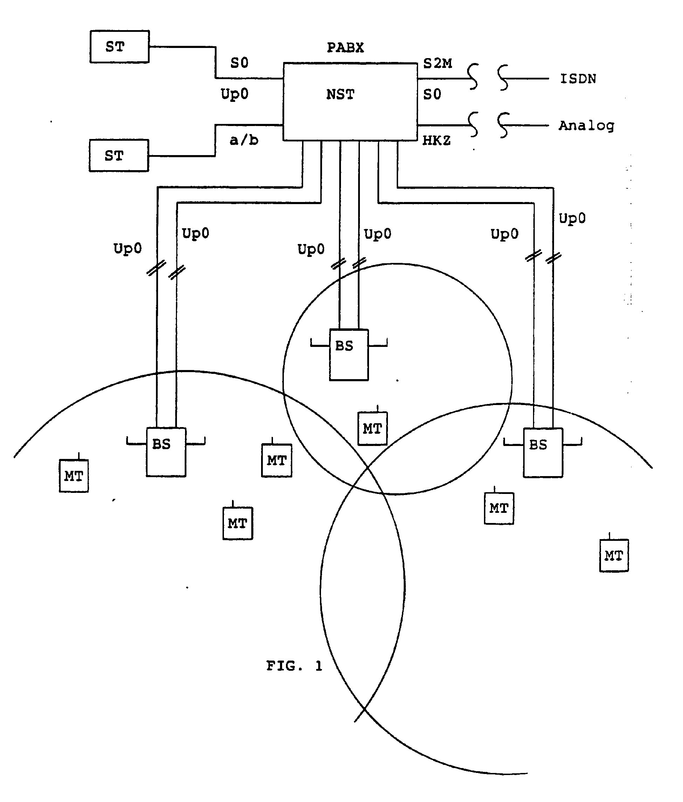

Der Vorteil der erfindungsgemäßen Lösung besteht darin, daß keine DECT-Controller-Units benötigt werden. Die Basisstationen BS des schnurlosen Kommunikations-Systems werden z. B. über n UPO-, UKO- oder SO-Schnittstellen, d. h. digitale Zweidraht-Schnittstellen mit zwei B-Kanälen mit je 64 kbit/s und einem D-Kanal mit 16 kbit/s und/oder S2M-Festverbindungen, d. h. 30 B-Kanäle und ein D-Kanal mit je 64 kbits/s, an die Nebenstellenanlage NST geschaltet. Die Basisstationen BS werden aus dem Telekommunikations-System ferngespeist und über den einen D-Kanal oder einen B-Kanal auf +/- 2µs synchronisiert. Aufgrund dieser Synchronisation ist eine unterbrechungsfreie Gesprächsübergabe von Basisstation BS zu Basisstation BS möglich. Über einen anderen D-Kanal oder B-Kanal wird das logische Protokoll zwischen Nebenstellenanlage NST und den Basisstationen BS übertragen. Da hierbei Standard-Schnittstellenkarten der Nebenstellenanlage NST verwendet werden, an die auch Systemtelefone ST anschließbar sind, können drahtgebundene Systemtelefone ST und DECT-Mobilteile MT völlig gleichartig betrieben werden (Fig. 1). Die Basisstationen BS und die Mobilteile MT sind zur Abwärtsladung fähig, d. h. während des Betriebes kann neue Software über die Nebenstellenanlage NST in die DECT-Peripherie geladen werden. Die DECT-Mobilteile MT funktonieren nach einem ähnlichen proprietären Stimulusprotokoll, wie die drahtgebundenen Systemtelefone ST. Dabei werden nur Tastendrücke zur Nebenstellenanlage NST gesendet, die Bewertung der Tastendrücke wird in der Nebenstellenanlage NST vorgenommen und wird von der Nebenstellenanlage NST mit Displaymeldungen etc. an den Endgeräten quittiert. Die Kontrolle der DECT-Mobilteile MT wird logisch durch die Nebenstellenanlage NST übernommen. Nur die Luftschnittstellen werden selbsttätig von den DECT-Basisstationen BS und den DECT-Mobilteilen MT gesteuert, damit keine Verzögerungen auftreten.

Die integrierten DECT-Mobilteile MT umfassen das Leistungsmerkmal des "Umherstreifens" (roaming), mit denen der Teilnehmer nicht nur an seiner Basisstation BS erreicht werden kann, indem die Nebenstelle NST den Anruf zu der Basisstation BS vermittelt, in deren Funkbereich sich das Mobilteil des Teilnehmers gerade befindet, d.h. der Teilnehmer ist beispielsweise auf einem Firmenglände überall erreichbar.

Eine nahtlose Übergabe (seamless handover) erlaubt es, daß sich der Teilnehmer frei innerhalb des gesamten Funknetzes bewegen kann. Das Gespräch wird dabei gesteuert von der DECT-Nebenstellenanlage NST von einer Basisstation BS zur nächsten Basisstation BS übergeben, ohne daß eine Beeinträchtigung des Gespräches eintritt. Der Anreiz für eine Übergabe erfolgt immer vom Mobilteil MT, wenn dieses aufgrund der Analyse von Feldstärke und Bitfehlerrate eine bessere Basisstation BS erkennt. Die Übergabe wird hierbei an so vielen Basisstationen BS unterstützt, wie an die Nebenstellenanlage NST angeschlossen werden können, z.B. eintausend Basisstationen. Dieses Leistungsmerkmal "handover" ist auch als "external handover" realisiert, d.h. im Gegensatz zu bekannten Lösungen bei denen nur ein "intercell handover" unterstütz wird und somit an maximal 128 Basisstationen ein "handover" möglich ist, wird in der vorliegenden Lösung ein "handover" an sovielen Basisstationen unterstützt, wie an die Nebenstellenanlage anschließbar sind. Von den Basisstationen und den Mobilteilen werden zusätzlich "intercell handover" unterstützt.

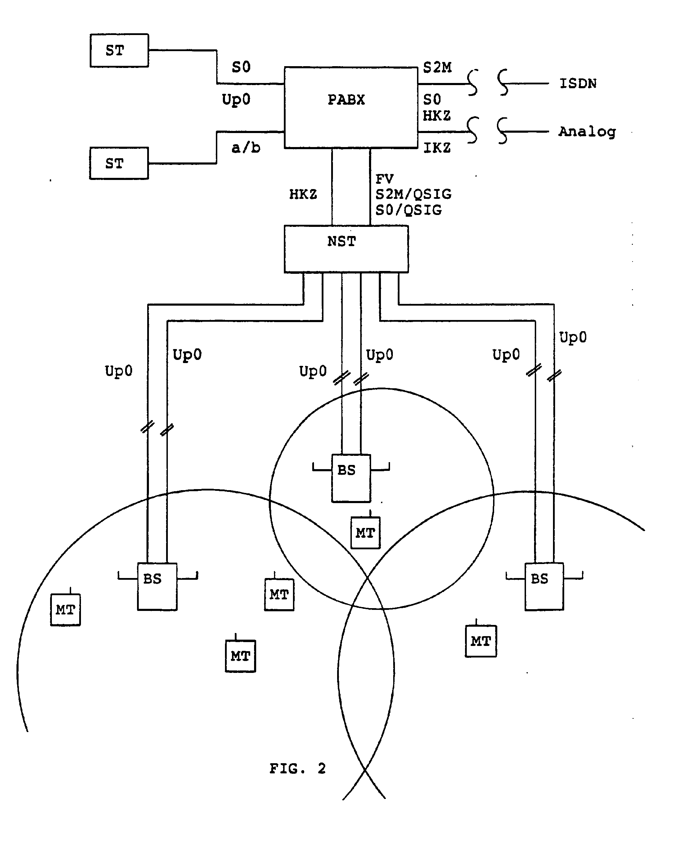

Eine derartige DECT-Nebenstellenanlage NST mit einer Anzahl von Basisstationen BS kann auch als abgesetzte Einheit (Server) an andere Telekommunikations-Systeme PABX ohne DECT-Integration angeschaltet werden, die Anbindung wird über SOoder S2M-Festverbindungen mit dem Standardprotokoll für eine Quersignalisierung (QSIG) vorgenommen (Fig. 2).

Neben dem Anschluß von nebenstellenspezifischen Endgeräten MT ist auch der Betrieb von DECT-Endgeräten, die mit dem GAP-Protokoll (Generic Acces Profile nach CTR 22) arbeiten, möglich. Endgeräte mit GAP-Standard und Endgeräte MT mit nebenstellenspezifischem Protokoll können an der gleichen Basisstation BS gleichzeitig betrieben werden, d. h. ein GAPkompatibles Endgerät kann ebensogut im Büro oder zu Hause genutzt werden, wobei ein Mobilgerät MT auf verschiedene feste Netze Zugriff erhält. Der Leistungsumfang von GAP-Endgeräten ist gegenüber den nebenstellenspezifischen Endgeräten eingeschränkt, eignet sich aber zusätzlich für den Anschluß von analogen oder digitalen Endgeräten über sogenannte schnurlose Telefonanschlußeinheiten.

Laptops mit einer PCMCIA-Schnittstelle und einem DECT-Modul können über die Luftschnittstelle z.B. 64 kbit/s Daten zur DECT-Nebenstelle übertragen. Die GAP-Fähigkeit der Basisstation erlaubt auch den Betrieb von sogenannten Multimode-Endgeräten, z.B. GSM (Global System for Mobile Communication) und DECT oder DCS 1800 (Digital Cellular System, entspricht dem deutschen E+-Netz) und DECT im DECT-Modus an der Nebenstellenanlage.

## Patentansprüche

1. Verfahren zum Anschluss von Basisstationen funkbetriebener Mobilteile nach dem DECT-Standard an ISDN-Nebenstellenanlagen, wobei
- die DECT-spezifischen Anteile des Systems in den Basisstationen (BS) integriert sind,
- die Basisstation (BS) über zwei digitale Schnittstellen, die über n B-Kanäle und n D-Kanäle verfügen, an die Nebenstellenanlage (NST) geschaltet werden,
- die Basisstationen (BS) aus der Nebenstellenanlage (NST) über einen der D-oder B-Kanäle synchronisiert werden,
- über den zweiten D- oder B-Kanal das logische Protokoll zwischen Nebenstellenanlage (NST) und Basisstation (BS) ausgetauscht wird und
- den Mobilteilen sämtliche Leistungsmerkmale der Nebenstellenanlage uneingeschränkt zur Verfügung stehen,
**dadurch gekennzeichnet,**
**dass** die Mobilteile nach einem ein proprietären StimulusProtokoll arbeiten, bei dem Tastendrücke an den Mobilteilen (MT) zur ISDN-Nebenstellenanlage (NST) gesendet, in der ISDN-Nebenstellenanlage (NST) bewertet und von der ISDN-Nebenstellenanlage (NST) mit Displaymeldungen an den Mobilteilen (MT) quittiert werden, wobei die Kontrolle der Mobilteile (MT) logisch durch die ISDN-Nebenstellenanlage (NST) übernommen und die Luftschnittstellen selbsttätig von den Basisstationen (BS) und den Mobilteilen (MT) gesteuert werden.

2. Verfahren nach einem der voranstehenden Ansprüche, **dadurch gekennzeichnet, dass** ein die Steuerinformationen zwischen den Mobilteilen (MT) und der ISDN-Nebenstellenanlage (NST) bereitstellendes DECT-Mobility-Management über eine Anpassung der DECT-Network-Management-Software in der ISDN-Nebenstellenanlage (NST) dargestellt wird.

3. Verfahren nach einem der voranstehenden Ansprüche, **dadurch gekennzeichnet, dass** die Synchronisation auf ± 2 µs über einen D-Kanal eine unterbrechungsfreie Gesprächsübergabe von Basisstation (BS) zu Basisstation (BS) gestattet, wobei die Gesprächsübergabe von einem Mobilteil (MT) veranlasst wird.

4. Verfahren nach einem der voranstehenden Ansprüche, **dadurch gekennzeichnet, dass** die Kontrolle der Mobilteile (MT) logisch durch die Nebenstellenanlage (NST) gesteuert wird.

5. Verfahren nach einem der voranstehenden Ansprüche, **dadurch gekennzeichnet, dass** die Nebenstellenanlage (NST) einen Ruf an ein Mobilteil (MT) jeweils an die Basisstation (BS) vermittelt, in deren Funkbereich sich das Mobilteil (MT) gerade befindet.

6. Verfahren nach einem der voranstehenden Ansprüche, **dadurch gekennzeichnet, dass** eine Übergabe von einer Basisstation (BS) zur nächsten durch Analysieren der Feldstärke und der Bitfehlerrate durch das Mobilteil (MT) veranlasst wird.

7. Verfahren nach einem der voranstehenden Ansprüche, **dadurch gekennzeichnet, dass** eine Nebenstellenanlage (NST) mit einer Anzahl von Basisstationen (BS) als Server an Telekommunikations-Systeme (PABX) ohne DECT-Integration schaltbar ist, wobei die Leistungsmerkmale der Nebenstellenanlage (NST) an den Mobilteilen (MT) uneingeschränkt verfügbar sind.

8. Verfahren nach einem der voranstehenden Ansprüche, **dadurch gekennzeichnet, dass** an eine DECT-betriebene Nebenstellenanlage (NST) außer den schnurlosen Mobilteilen (MT) auch Endgeräte, die nach dem GAP-Protokoll arbeiten, über die Basisstationen (BS) schaltbar sind.

## Claims

1. Method for connecting base stations of radio portable parts according to the DECT standard to ISDN private branch exchanges, wherein
- the DECT-specific components of the system are integrated in the base stations (BS),
- the base stations (BS) are connected to the private branch exchange (NST) via two digital interfaces which have n B channels and n D channels,
- the base stations (BS) are synchronized from the private branch exchange (NST) via one of the D or B channels,
- the logical protocol is exchanged between private branch exchange (NST) and base station (BS) via the second D or B channel, and
- all features of the private branch exchange are unrestrictedly available to the portable parts,
**characterized in that**
the portable parts operate in accordance with a proprietary stimulus protocol in which keystrokes at the portable parts (MT) are sent to the ISDN private branch exchange (NST), are evaluated in the ISDN private branch exchange (NST) and are acknowledged by the ISDN private branch exchange (NST) with display messages at the portable parts (MT), wherein the control of the portable ports (MT) is logically taken over by the ISDN private branch exchange (NST) and the air interfaces are automatically controlled by the base stations (BS) and the portable parts (MT).

2. Method according to claim 1, **characterized in that** a DECT mobility management providing the control information between the portable parts (MT) and the ISDN private branch exchange (NST) is represented in the ISDN private branch exchange (NST) via an adaptation of the DECT network management software.

3. Method according to one of the preceding claims, **characterized in that** the synchronization to ± 2 µs via a D channel allows an uninterrupted handover from base station (BS) to base station (BS), the handover being initiated by a portable part (MT).

4. Method according to one of the preceding claims, **characterized in that** the control of the portable parts (MT) is logically controlled by the private branch exchange (NST).

5. Method according to one of the preceding claims, **characterized in that** the private branch exchange (NST) in each case switches a call to a portable part (MT) to the base station (BS) in the radio cell of which the portable part (MT) happens to be located.

6. Method according to one of the preceding claims, **characterized in that** a handover from a base station (BS) to the next is initiated by the portable part (MT) by analysing the field strength and the bit error rate.

7. Method according to one of the preceding claims, **characterized in that** a private branch exchange (NST) with a number of base stations (BS) can be connected as server to telecommunication systems (PABX) without DECT integration, the features of the private branch exchange (NST) being unrestrictedly available at the portable parts (MT).

8. Method according to one of the preceding claims, **characterized in that**, apart from the cordless portable parts (MT), terminals operating in accordance with the GAP protocol can also be connected to a DECT-operated private branch exchange (NST) via the base stations (BS).

## Revendications

1. Procédé pour connecter des stations de base de parties mobiles radioélectriques selon la norme DECT à des autocommutateurs privés RNIS,
- les parties spécifiques DECT du système étant intégrées dans les stations de base (BS),
- la station de base (BS) étant connectée à l'autocommutateur privé (NST) par le biais de deux interfaces numériques qui disposent de n canaux B et de n canaux D,
- les stations de base (BS) étant synchronisées depuis l'autocommutateur privé (NST) par le biais de l'un des canaux D ou B,
- le protocole logique étant échangé entre l'autocommutateur privé (NST) et la station de base (BS) par le biais du deuxième canal D ou B et
- toutes les capacités de l'autocommutateur privé étant à la disposition illimitée des parties mobiles,
**caractérisé en ce**
**que** les parties mobiles fonctionnent selon un protocole à stimulus propriétaire avec lequel les pressions sur les touches des parties mobiles (MT) sont envoyées à l'autocommutateur privé RNIS (NST), évaluées dans l'autocommutateur privé RNIS (NST) et confirmées par l'autocommutateur privé RNIS (NST) avec des messages affichés sur les parties mobiles (MT), le contrôle de la partie mobile (MT) étant pris en charge de manière logique par l'autocommutateur privé RNIS (NST) et les interfaces radioélectriques étant commandées de manière autonome par les stations de base (BS) et les parties mobiles (MT).

2. Procédé selon revendication 1, **caractérisé en ce qu'**une gestion de la mobilité DECT fournissant les informations de commande entre les parties mobiles (MT) et l'autocommutateur privé RNIS (NST) est représentée par une adaptation du logiciel de gestion de réseau DECT dans l'autocommutateur privé RNIS (NST).

3. Procédé selon l'une des revendications précédentes, **caractérisé en ce que** la synchronisation à ±2 µs par le biais d'un canal D permet une transmission de la parole sans interruption d'une station de base (BS) vers une autre station de base (BS), la transmission de la parole étant demandée depuis une partie mobile (MT).

4. Procédé selon l'une des revendications précédentes, **caractérisé en ce que** le contrôle des parties mobiles (MT) est commandé de manière logique par l'autocommutateur privé (NST).

5. Procédé selon l'une des revendications précédentes, **caractérisé en ce que** l'autocommutateur privé (NST) communique un appel à une partie mobile (MT) à chaque fois à la station de base (BS) dans la zone de radiocommunication de laquelle se trouve momentanément la partie mobile (MT).

6. Procédé selon l'une des revendications précédentes, **caractérisé en ce qu'**une transmission d'une station de base (BS) vers la suivante est demandée par la partie mobile (MT) en analysant l'intensité du champ et le taux d'erreurs binaires.

7. Procédé selon l'une des revendications précédentes, **caractérisé en ce qu'**un autocommutateur privé (NST) comprenant un certain nombre de stations de base (BS) peut être commuté en tant que serveur à des systèmes de télécommunication (PABX) sans intégration de DECT, les capacités de l'autocommutateur privé (NST) étant à la disposition illimitée des parties mobiles (MT).

8. Procédé selon l'une des revendications précédentes, **caractérisé en ce que** des terminaux qui fonctionnent selon le protocole GAP peuvent également être connectés par le biais des stations de base (BS) à un autocommutateur privé (NST) fonctionnant en DECT en plus des parties mobiles sans fil (MT).
